# EUROPÄISCHE PATENTSCHRIFT

(11) **EP 1 508 494 B1**
(45) Veröffentlichungstag und Bekanntmachung des Hinweises auf die Patenterteilung: **07.06.2006**
(21) Anmeldenummer: 04103641.9
(22) Anmeldetag: 28.07.2004
(51) Int. Cl.: B62D 5/00, B62D 5/065, B62D 5/09

(54) **Hilfskraftunterstütztes Lenksystem für ein Kraftfahrzeug, mit hydraulischer offener Mitte**
Power assisted steering system for a vehicle, with hydraulic open center
Système de direction assistée pour véhicule, avec centre ouvert hydraulique

(30) Priorität: 19.08.2003 DE 10337954
(43) Veröffentlichungstag der Anmeldung: 23.02.2005
(73) Patentinhaber: Bayerische Motoren Werke Aktiengesellschaft, 80809 München (DE)
(72) Erfinder: Müller, Steffen, 81669 München (DE); Fleck, Reidar, 80995 München (DE)

(56) Entgegenhaltungen:
- DE-A1- 4 409 928
- DE-A1- 10 032 340
- DE-C1- 19 540 956
- US-A- 5 267 627
- US-A- 6 122 912
- US-B1- 6 285 936

## Beschreibung

Die Erfindung betrifft ein hilfskraftunterstütztes Lenksystem für ein Kraftfahrzeug, mit hydraulischer offener Mitte, mit einer mechanischen Verbindung zwischen dem Lenkrad des Fahrers und einem den Fahrer-Lenkwunsch an den lenkbaren Fahrzeug-Rädern umsetzenden Lenkgetriebe, wobei ein zur Kraftunterstützung dem Lenkgetriebe zugeordneter Gleichlaufzylinder über ein herkömmliches Drehschieberventil mit Hydraulikmedium beaufschlagt wird und im Hinblick auf eine einstellbare Momentenunterstützung am Lenkrad ein von einem geeignet angesteuerten Elektromotor betriebener Handmomentensimulator vorgesehen ist, und wobei eine dem Gleichlaufzylinder das Hydraulikmedium zuführende Pumpe mit bedarfsangepasster Leistung fördert. Hierzu wird beispielshalber auf die DE 195 40 956 C1 verwiesen.

Grundsätzlich sind eine Vielzahl unterschiedlicher Lenksysteme für Kraftfahrzeuge, bspw. Personenkraftwagen, bekannt. Die einfachsten Systeme übertragen dabei den vom Fahrer mit seinem Lenkrad vorgegebenen Lenkwinkel an die lenkbaren Fahrzeugräder ohne jegliche Kraft- bzw. Momentenunterstützung, d.h. dass der Fahrer die zum Einschlagen der Räder erforderliche Kraft bzw. das entsprechende Moment am Lenkrad selbst vollständig aufbringen muss. Heute durchaus üblich sind jedoch Systeme mit Kraft- bzw. Momentenunterstützung, insbesondere hydraulisch arbeitend.

Bekannt und teilweise bereits in Serie sind ferner Lenksysteme, bei denen dem vom Fahrer vorgegebenem Lenkwinkel ein zusätzlicher gleich- oder gegengerichteter sog. Korrektur-Lenkwinkel überlagert werden kann (vgl. bspw. DE 100 32 340 A1). Hiermit kann einerseits die Lenk-Übersetzung zwischen dem Lenkrad und den lenkbaren Rädern verändert werden und andererseits können hiermit fahrdynamische Regeleingriffe insbesondere zur Stabilisierung des Fahrzeugs umgesetzt werden. Im Falle einer mechanischen Verbindung zwischen dem Lenkrad und den lenkbaren Rädern wird dieser sog. Korrektur-Lenkwinkel mittels eines Überlagerungsgetriebes (bspw. als Planetengetriebe ausgebildet) eingeleitet, an das ein hierfür geeignet angesteuerter Elektromotor angekoppelt ist. Bekannt sind darüber hinaus die sog. steer-by-wire-Systeme, bei denen keine mechanische Verbindung zwischen dem Lenkrad des Fahrers (bzw. allgemein seiner Lenkhandhabe) und den lenkbaren Rädern vorgesehen ist. Über geeignete Stellmotoren oder dgl. lässt sich dabei nicht nur jeder beliebige mögliche Lenkwinkel an den lenkbaren Fahrzeug-Rädern einstellen, sondern es ist auch möglich, am Lenkrad des Fahrers bzw. an seiner Lenkhandhabe in Verbindung mit einer Verstellung desselben bzw. derselben eine in Größe und Richtung beliebige Gegenkraft oder Unterstützungskraft bzw. ein beliebiges Gegenmoment oder Unterstützungsmoment anzulegen.

Grundsätzlich ist an Systemen ein möglichst breites Spektrum von Variabilitäten erwünscht, da hiermit auf den jeweiligen Fall optimierte Bedingungen eingestellt werden können. An einem Fahrzeug-Lenksystem ist es also erwünscht, wenn an den lenkbaren Fahrzeugrädern auch ein von der Lenkvorgabe des Fahrers abweichender Lenkwinkel eingestellt werden kann. Ferner ist es erwünscht, dem Fahrer über eine wählbare Gegenkraft oder Unterstützungskraft bzw. über ein beliebiges Gegenmoment oder Unterstützungsmoment bei einer Lenkrad-Betätigung eine in Größe und Richtung beliebige Rückmeldung an seinem Lenkrad geben zu können.

Diese soeben genannten Anforderungen erfüllt ein steer-by-wire-System zwar optimal, jedoch ist ein solches System aufgrund der fehlenden mechanischen Verbindung zwischen dem Lenkrad des Fahrers und den lenkbaren Fahrzeugrädern sicherheitsproblematisch. Auf eine redundante Auslegung kann im Hinblick auf mögliche Störfälle nicht verzichtet werden, was somit einen hohen Aufwand bedeutet. Demgegenüber wesentlich günstiger ist ein bereits beschriebenes Überlagerungs-Lenksystem, jedoch erlaubt dieses bislang keine frei wählbare Rückmeldung an den Fahrer in Form eines sowohl in Richtung als auch in Größe beliebigen Gegenmoments bzw. Unterstützungsmoments an seinem Lenkrad.

Eine weitere wesentliche Anforderung bei Kraftfahrzeugen, insbesondere Personenkraftwagen, ist diejenige nach einem hohen Wirkungsgrad und nach möglichst geringer Verlustleistung. Wenn wie üblich eine sog. Lenkhilfepumpe zur Versorgung des zur Kraftunterstützung dem Lenkgetriebe zugeordneten hydraulisch beaufschlagten Gleichlaufzylinders vorgesehen ist, so wird diese Lenkhilfepumpe üblicherweise vom Antriebsaggregat des Fahrzeugs - üblicherweise einer Brennkraftmaschine - angetrieben. Zumindest bei hydraulischen Hilfskraft-Lenksystemen mit offener Mitte ("Open-Center-Lenksystem") üblich ist dabei der Antrieb über ein endloses Zugmittelgetriebe unter konstantem Übersetzungsverhältnis, was zur Folge hat, dass insbesondere bei hohen Drehzahlen der Brennkraftmaschine bzw. des Antriebsaggregats und somit bei höheren bzw. hohen Fahrgeschwindigkeiten des Kraftfahrzeugs die Lenkhilfepumpe eine große Menge von Hydraulikmedium fördert, welche bei diesem Fahrzeug-Betrieb jedoch überhaupt nicht benötigt wird. Energiesparende Alternativen hierzu sind grundsätzlich bekannt, vgl. bspw. DE 44 09 928 A1.

In diesem Zusammenhang sei auf den Begriff der "hydraulisch offenen Mitte" eingegangen, der ein Lenksystem mit einem lastfrei offenen Lenkhilfeventil beschreibt und bei welchem das Hydraulikmedium andauernd und insbesondere auch ohne einen Lenkeinschlag in Lenkungs-Neutralstellung umgewälzt wird. Ein hydraulisch hilfskraftunterstütztes Lenksystem mit offener Mitte (= sog. "Open-Center-Lenksystem") zeichnet sich dabei durch ein sehr gutes Ansprechverhalten und durch ein gutes Rückmeldeverhalten an den Fahrer, insbesondere was Störeinflüsse seitens der Fahrbahn betrifft, aus. Bekannt sind ferner die sog. "Closed-Center-Lenksysteme" (mit hydraulisch geschlossener Mitte), bei denen eine Pumpe das Hydraulikmedium bedarfsgeregelt in einen Druckspeicher pumpt. Naturgemäß ist die Verlustleitung bei einem Lenksystem mit geschlossener Mitte geringer als bei einem Lenksystem mit offener Mitte.

Nachdem somit Bedarf an einem hydraulisch hilfskraftunterstützten Lenksystem mit offener Mitte für ein Kraftfahrzeug besteht, das eine mechanische Verbindung zwischen dem Lenkrad des Fahrers und einem den Fahrer-Lenkwunsch an den lenkbaren Fahrzeug-Rädern umsetzenden Lenkgetriebe besitzt und ein Überlagerungsgetriebe aufweist, über das dem vom Fahrer vorgegebenen Lenkwinkel mittels eines geeignet angesteuerten Elektromotors ein Korrektur-Lenkwinkel hinzugefügt werden kann, sollen hiermit für ein Lenksystem nach dem Oberbegriff des Anspruchs 1 Maßnahmen aufgezeigt werden, mit Hilfe derer sinnvoll eine einstellbare Momentenunterstützung (und somit eine in Größe und Richtung beliebige Rückmeldung an den Fahrer) erzielt werden kann (= Aufgabe der vorliegenden Erfindung). Diese Aufgabe wird durch die Merkmale des einzigen Patentanspruchs gelöst, was im weiteren anhand einer beigefügten Prinzipskizze näher erläutert wird.

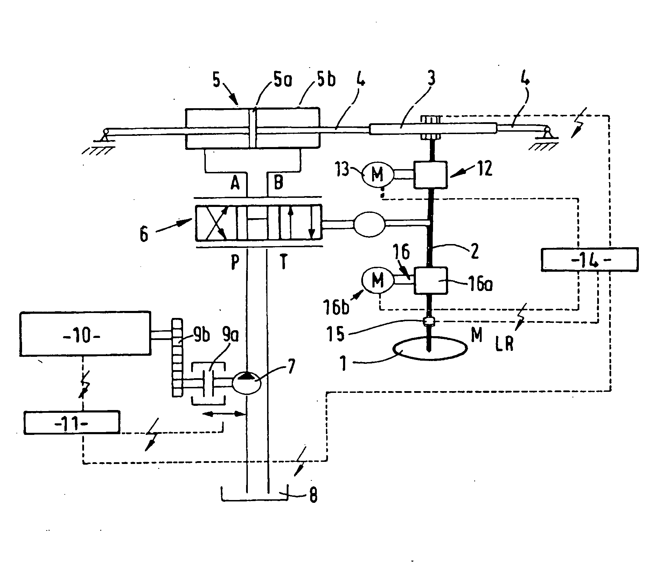

Mit der Bezugsziffer 1 ist das Lenkrad eines Kraftfahrzeugs bzw. des Lenksystems eines PKW's gekennzeichnet, das über eine Lenkspindel 2 mechanisch mit einem Lenkgetriebe 3 verbunden ist. Hier handelt es sich um eine Zahnstangenlenkung, wobei die mit einem Verdrehen des Lenkrads 1 bzw. der Lenkspindel 2 wie üblich quer zu dieser verschiebbar im Lenkgetriebe 3 angeordnete Zahnstange 4 jeweils endseitig mit einer figürlich nicht dargestellten Spurstange verbunden ist, von denen jede letztlich derart auf ein nicht dargestelltes lenkbares Fahrzeug-Rad einwirkt, dass dieses um seine Lenkachse verschwenkt wird. In den in der Figur linksseitigen Teil der Zahnstange 4 ist ein sog. Gleichlaufzylinder 5 integriert bzw. die Zahnstange 4 ist am Kolben 5a des Gleichlaufzylinders 5, der in dessen Zylindergehäuse 5b in Richtung der möglichen Verschieberichtung dieser Zahnstange 4 verschiebbar geführt ist, befestigt. Beidseitig des Kolbens 5a sind im Zylindergehäuse 5b Hydraulikkammern gebildet, von denen aus Hydraulikleitungen zu Anschlüssen A bzw. B eines Ventils 6 führen, auf welches später noch eingegangen wird.

Das Ventil 6 besitzt neben den beiden Anschlüssen A und B zwei weitere Anschlüsse P und T, wobei der Anschluss P über eine Hydraulikleitung mit der Förderseite einer Pumpe 7 verbunden ist, die saugseitig mit einem Hydraulik-Tank 8 verbunden ist. Der Anschluss T des Ventils 6 ist direkt mit diesem Tank 8 verbunden. In Abhängigkeit von der Durchschalt-Position des Ventils 6 kann die Pumpe 7 somit Hydraulikmedium aus dem Tank 8 in eine der beiden Hydraulikkammern des Gleichlaufzylinders 5 fördern, während aus der anderen Hydraulikkammer eine entsprechende Teilmenge von Hydraulikmedium in den Tank 8 abgeführt wird. Dementsprechend wird eine der beiden Hydraulikkammern vergrößert und die andere verkleinert bzw. dementsprechend wird der Kolben 5a im Zylindergehäuse 5b nach rechts oder nach links verschoben. Hierdurch kann somit der Fahrer beim Lenken unterstützt werden, indem bei Verdrehen des Lenkrads 1 mit geeignetem Schalten des Ventils 6 aus dem Lenkrad-Verdrehen resultierend die Zahnstange 4 des Lenkgetriebes 3 durch den Gleichlaufzylinder 5 kraftunterstützend mitverschoben wird. Die Kraftunterstützung an der Zahnstange 4 kommt einer Momentenunterstützung am Lenkrad 1 gleich, und zwar hervorgerufen durch den dem Lenkgetriebe 3 zugeordneten Gleichlaufzylinder 5.

Die das Hydraulikmedium für den Gleichlaufzylinder 5 fördernde Pumpe 7 wird in diesem bevorzugten Ausführungsbeispiel unter Zwischenschaltung einer Kupplung 9a vom Antriebsaggregat 10 des Kraftfahrzeugs angetrieben, und zwar (bspw.) über ein endloses Zugmittelgetriebe 9b. Dargestellt ist ferner eine erste elektronische Steuereinheit 11, welche unter anderem die Steuerungstunktionen für die Drehzahlregelung der Pumpe 7 und bspw. für die Kupplung 9a übernimmt. Die entsprechende Signalübertragung erfolgt über eine Signalleitung, die gestrichelt dargestellt und zur Verdeutlichung mit einem Elektroblitz versehen ist. Auch die weiteren wesentlichen Signalleitungen sind in dieser Weise dargestellt, während die Hydraulikleitungen zwischen dem Tank 8, der Pumpe 7, dem Ventil 6 und dem Gleichlaufzylinder 5 in durchgezogenen Linien dargestellt sind.

In die Lenkspindel 2 ist ein Überlagerungsgetriebe 12 integriert, das bevorzugt in Form eines Planetengetriebes ausgebildet ist, und über das dem vom Fahrer des Kraftfahrzeugs mit seinem Lenkrad 1 vorgegebenen Lenkwinkel ein gleichgerichteter oder entgegengerichteter Lenkwinkel hinzuaddiert, d.h. überlagert werden kann. Dies kann mittels eines auf das Überlagerungsgetriebe 12 geeignet einwirkenden Elektromotors 13 erfolgen, der hierzu von einer zweiten elektronischen Steuereinheit 14 entsprechend angesteuert wird (vgl. die zugehörige Signalleitung). Im dieser zweiten elektronischen Steuereinheit 14 werden hierfür eine Vielzahl von Signalen verarbeitet, um zu ermitteln, ob und in welchem Umfang ein vom FahrerWunsch abweichender Lenkwinkel an den lenkbaren Fahrzeug-Rädern umgesetzt werden sollte, bspw. im Hinblick auf eine Stabilisierung des Fahrzeugs. Über eine vom Lenkgetriebe 3 abgehende Signalleitung erhält die zweite Steuereinheit 14 hierzu auch die Kontroll-Information über den nach einem Eingriff durch das Überlagerungsgetriebe 12 umgesetzten Lenkwinkel.

Ferner empfängt die zweite Steuereinheit 14 die Signale eines in der Lenkspindel 2 vorgesehenen Drehmomenten-Sensors 15, so dass auch eine geeignet weiterzuverarbeitende Information über das vom Fahrer bei Lenken an das Lenkrad 1 angelegte Drehmoment vorliegt. Diese Information ist wesentlich, wenn dem Fahrer eine in Größe und Richtung beliebige Rückmeldung durch ein entsprechendes Gegenmoment oder Unterstützungsmoment beim Lenken gegeben werden soll, so dass sich für den Fahrer an seinem Lenkrad 1 eine praktisch beliebige Momentenrückmeldung in Form des sog. Handmoments einstellt. Dies ist beim hier beschriebenen Lenksystem möglich.

Zwar ist das die hydraulische Ansteuerung des Gleichlaufzylinders 5 übernehmende Ventil 6 in Form eines bei hydraulischen Servolenkungen üblichen Drehschieberventils ausgebildet, jedoch kann das hierdurch erzeugte nicht frei regelbare Handmoment bzw. die hiermit erzeugte nicht frei einstellbare Momentenunterstützung am Lenkrad 1 entsprechend einer in der zweiten Steuereinheit 14 implementieren Ansteuerlogik mittels eines an der Lenkspindel 2 vorgesehenen bzw. auf diese einwirkenden sog. Handmomenten-Simulators 16 modifiziert werden. Derartige Handmomenten-Simulatoren, die bspw. wie hier aus einer Stelleinheit 16a und einem auf diese geeignet einwirkenden Elektromotor 16b bestehen, sind grundsätzlich bekannt, vgl. bspw. die DE 101 57 797 A1. Hier ermöglicht also eine geeignete Ansteuerung des Elektromotors 16b durch die zweite Steuereinheit 14 eine freie und von Aktionen des Fahrers unabhängige Regelung der Momentenunterstützung und somit des Handmoments am Lenkrad 1.

Dabei steht die zweite elektronische Steuereinheit 14 mit der ersten elektronischen Steuereinheit 11 in Signalübertragungs-Verbindung. Somit können in diesen beiden elektronischen Steuereinheiten 11, 14 auch Informationen über den Bedarf von Kraft- bzw. Momentenunterstützung durch den Gleichlaufzylinder 5 sowie über die zur Verfügung stehende Förderleistung der den Gleichlaufzylinder 5 mit Hydraulikmedium versorgenden Pumpe 7 verarbeitet werden, nachdem auch eine Signalleitung zwischen der Kupplung 9a und/oder dem Zugmittelgetriebe 9b sowie der ersten elektronischen Steuereinheit 11 vorgesehen ist.

Nun ist vorgesehen, dass die Pumpe 7 mit bedarfsangepasster Leistung fördert, wobei der Begriff "bedarfsangepasst" relativ weit bzw. umfassend zu verstehen ist. So soll dann, wenn das Kraftfahrzeug mit hoher Geschwindigkeit bewegt und das Antriebsaggregat 10 (des Kraftfahrzeugs sowie der Pumpe 7) folglich mit hoher Drehzahl betrieben wird, die Pumpe 7 zumindest dann nicht mit ihrer Maximal-Drehzahl betrieben werden, wenn das Fahrzeug im wesentlichen geradeaus fährt und somit im Gleichlaufzylinder 5 nur ein minimaler Bedarf von Hydraulikmedium anfällt. Mit einer geeigneten dementsprechenden Maßnahme kann somit die vom Antriebsaggregat 10 abgezweigte Leistung reduziert werden, nachdem in der Pumpe 7 bzw. im zugehörigen Hydraulikkreislauf aufgrund der bedarfsangepassten Förderleistung eine geringere Verlustleistung anfällt.

Dabei bestehen verschiedene Möglichkeiten, wie die Pumpe 7 mit der sog. bedarfsangepassten Förderleistung betrieben werden kann. So kann das Zugmittelgetriebe 9b bzw. allgemein ein Getriebe zwischen der Pumpe 7 und dem auch diese antreibenden Antriebsaggregat 10 vorgesehenes Getriebe mit veränderlicher Übersetzung ausgebildet sein, bspw. nach Art eines sog. CVT-Getriebes. Es kann aber auch die Kupplung 9a in geeigneter Weise geschaltet werden, derart, dass die Pumpe 7 zeitweise überhaupt nicht angetrieben wird, wobei im Falle eines variablen Übersetzungsverhältnisses im Getriebe 9b ggf. die Kupplung 9a überhaupt nicht erforderlich ist. Ferner bestehen verschiedene Möglichkeiten, die in bzw. an der Pumpe 7 selbst vorgesehen sind, um eine bedarfsangepasste Förderleistung zu erzielen. So kann die Pumpe 7 bspw. eine vom Steuergerät 11 geeignet angesteuerte Verstellpumpe sein, ferner kann eine ECO-Pumpe (= electronically controlled orifice pump) oder eine PCO-Pumpe (= pressure controlled orifice pump) zum Einsatz kommen, bei denen es sich bekanntermaßen um Pumpen mit variablem Kurzschlusskreislauf handelt, d.h. in Abhängigkeit von der geforderten Förderleistung wird ein geringer oder größerer Anteil des geförderten Volumenstroms in einem Kurzschlusskreislauf unter Druck stehend sofort wieder der Pumpensaugseite zugeführt. Stets erfolgt dabei die entsprechende Ansteuerung durch eine bzw. die elektronische Steuereinheit 11, welche die erforderlichen Informationen geeignet verarbeitet, wobei darauf hingewiesen sei, dass die hier beiden Steuereinheiten 11, 14 auch in einer einzigen elektronischen Steuereinheit zusammengefasst sein können.

Ein erfindungsgemäßes Lenksystem zeichnet sich durch eine vollständige sog. steer-by-wire-Funktionalität aus, d.h. es sind vom Fahrer bzw. von der Lenkrad-Vorgabe unabhängige Lenkwinkel an den gelenkten Fahrzeug-Rädern umsetzbar und es kann ein in Größe und Richtung beliebiges sog. Handmoment (aufgrund der variablen Momenten-Unterstützung) am Lenkrad 1 eingestellt werden, um dem Fahrer die jeweils bestmögliche Rückmeldung geben zu können. Des weiteren zeichnet sich ein erfindungsgemäßes Lenksystem durch verringerte Verlustleistung aus, wobei noch darauf hingewiesen sei, dass durchaus eine Vielzahl von Details abweichend von obigen Erläuterungen gestaltet sein kann, ohne den Inhalt der Patentansprüche zu verlassen. Beispielsweise kann es sich beim Antriebsaggregat 10 für die Pumpe 7 auch um einen Elektromotor handeln oder es ist die dargestellte Kupplung 9a nicht vorhanden.

## Patentansprüche

1. Hilfskraftunterstütztes Lenksystem für ein Kraftfahrzeug, mit hydraulisch offener Mitte, mit einer mechanischen Verbindung zwischen dem Lenkrad (1) des Fahrers und einem den Fahrer-Lenkwunsch an den lenkbaren Fahrzeug-Rädern umsetzenden Lenkgetriebe (3), wobei ein zur Kraftunterstützung dem Lenkgetriebe (3) zugeordneter Gleichlaufzylinder (5) über ein herkömmliches Drehschieberventil (6') mit Hydraulikmedium beaufschlagt wird und im Hinblick auf eine einstellbare Momentenunterstützung am Lenkrad (1) ein von einem geeignet angesteuerten Elektromotor (16b) betriebener Handmomentensimulator (16) vorgesehen ist, und wobei eine dem Gleichlaufzylinder (5) das Hydraulikmedium zuführende Pumpe (7) mit bedarfsangepasster Leistung fördert, und hierzu als Verstellpumpe ausgebildet oder im Hinblick hierauf mit unabhängig von der Drehzahl des Pumpen-Antriebsaggregats (10) veränderlicher Drehzahl oder mit variablem Kurzschlusskreislauf betrieben wird,
**dadurch gekennzeichnet, dass** ein Überlagerungsgetriebe (12) vorgesehen ist, über das dem vom Fahrer vorgegebenen Lenkwinkel mittels eines geeignet angesteuerten Elektromotors (13) ein Korrektur-Lenkwinkel hinzugefügt werden kann, und dass ein Drehmomenten-Sensor (15) das vom Fahrer beim Lenken an das Lenkrad (1) angelegte Drehmoment abgreift, dessen Signal in einer elektronischen Steuereinheit (14, 11) verarbeitet wird, um weiter in Abhängigkeit von der Ansteuerung des dem Überlagerungsgetriebe (12) zugeordneten Elektromotors (13) unter Berücksichtigung des an den lenkbaren Rädern umgesetzten Lenkwinkels sowie in Abhängigkeit vom Bedarf an Kraft- bzw. Momentenunterstützung durch den Gleichlaufzylinder (5) und der zur Verfügung stehenden Förderleistung der Pumpe (7) den Handmomentensimulator (16) im Hinblick auf eine gewünschte beliebige Momentenunterstützung am Lenkrad (1) geeignet anzusteuern.

## Claims

1. A power-assisted steering system for a motor vehicle, comprising a hydraulically open centre, with a mechanical connection between the driver's steering wheel (1) and a steering gear (3) implementing the driver's steering wishes at the steerable vehicle wheels, a synchronising cylinder (5), which is associated with the steering gear (3) for the purposes of power assistance, being acted on by hydraulic medium via a conventional rotary slide valve (6'), a manual torque simulator (16), operated by a suitably activated electric motor (16b), being provided with respect to an adjustable torque assistance of the steering wheel (1), and wherein a pump (7) supplying the hydraulic medium to the synchronising cylinder (5) delivers at a flow rate adapted to requirements and is configured for this purpose as a variable displacement pump or is operated, in this regard, at a rotational speed, which may be varied independently of the rotational speed of the pump/drive unit (10), or with variable bypass circulation, **characterised in that** an overriding gear (12), via which a correcting steering angle may be added, using a suitably activated electric motor (13), to the steering angle determined by the driver, is provided, and **in that** a torque sensor (15) taps the torque applied to the steering wheel (1) by the driver during steering, the signal of the torque sensor being processed in an electronic control unit (14, 11) in order, moreover, suitably to activate the manual torque simulator (16) with respect to a desired arbitrary torque assistance of the steering wheel (1), as a function of the activation of the electric motor (13) associated with the overriding gear (12), in view of the steering angle implemented at the steerable wheels, and as a function of the need for power or torque assistance by means of the synchronising cylinder (5), and of the available flow rate delivered by the pump (7).

## Revendications

1. Système de direction assistée pour un véhicule automobile, comprenant un centre ouvert hydraulique, une liaison mécanique entre le volant de direction (1) du conducteur et un boîtier de direction (3) transformant le souhait du conducteur appliqué au volant vers les roux dirigeables du véhicule, un cylindre de synchronisation (5) associé au boîtier de direction (3) pour la direction assistée étant sollicité par un milieu hydraulique par le biais d'un distributeur à tiroir rotatif (6') classique, et on prévoit, en vue d'assister le couple réglable sur le volant (1), un simulateur de couples manuels (16) entraîné par un moteur électrique (16b) commandé de manière appropriée, et une pompe (7) acheminant le milieu hydraulique vers le cylindre de compensation (5) étant alimentée à une puissance adaptée aux besoins, cette pompe étant réalisée à cet effet sous la forme d'une pompe à cylindrée variable ou est entraînée dans ce but avec une vitesse de rotation pouvant être modifiée indépendamment de la vitesse de rotation du dispositif d'entraînement de la pompe (10) ou avec un circuit de court-circuitage variable,
**caractérisé en ce qu'**
on prévoit une boîte d'engrenages de superposition (12) qui permet d'ajouter un angle de direction de correction à l'angle de direction prédéterminé par le conducteur, à l'aide d'un moteur électrique (13) commandé de manière appropriée, et un capteur de couples (15) utilise le couple appliqué par le conducteur lorsqu'il tourne le volant (1), dont le signal est traité dans une unité de commande électronique (14, 11), pour commander de manière appropriée le simulateur de couples manuels (16) afin d'obtenir un couple assisté quelconque souhaité sur le volant (1) toujours en fonction de la commande du moteur électrique (13) associé à la boîte d'engrenages de superposition (12) en prenant en considération l'angle de direction transformé au niveau des roues dirigeables et en fonction des besoins en force ou couple assisté(e) dans le cylindre de compensation (5) et du débit disponible de la pompe (7).
